# EUROPÄISCHE PATENTSCHRIFT

(11) **EP 1 943 895 B1**
(45) Veröffentlichungstag und Bekanntmachung des Hinweises auf die Patenterteilung: **29.07.2009**
(21) Anmeldenummer: 08000200.9
(22) Anmeldetag: 08.01.2008
(51) Int. Cl.: A01D 46/253, A01D 46/26

(54) **Tragbares Erntegerät**
Portable harvesting device
Moissonneuse portable

(30) Priorität: 12.01.2007 DE 102007002625
(43) Veröffentlichungstag der Anmeldung: 16.07.2008
(73) Patentinhaber: Andreas Stihl AG & Co. KG, 71336 Waiblingen (DE)
(72) Erfinder: Fattorusso, Antonio, 71394 Kernen i.R. (DE); Herzog, Markus, 71384 Weinstadt (DE); Andresen, Erik, 70597 Stuttgart (DE); Menzel, Johannes Konstantin, 73529 Schwäbisch Gmünd (DE); Weimer, Ina, 71336 Waiblingen (DE); Uhl, Klaus Martin, 73207 Plochingen (DE); Nickel, Hans, deceased (DE); Friedrich, Reinhard, 71332 Waiblingen (DE); Nantt, Wolfgang, 71711 Steinheim (DE); Rabis, Manfred, 71409 Schwaikheim (DE); Hilt, Thomas, 71364 Winnenden (DE); Stark, Thomas, 71336 Waiblingen (DE); Dragisa, Dakic, 71634 Ludwigsburg (DE)
(74) Vertreter: Wasmuth, Rolf

(56) Entgegenhaltungen:
- EP-A- 1 116 432
- EP-A- 1 175 823
- EP-A- 1 621 063
- WO-A-20/06024883
- US-A- 5 099 637

## Beschreibung

Die Erfindung betrifft ein tragbares Erntegerät wie Olivenschüttler, Kaffeeernter oder dgl. der im Oberbegriff des Anspruchs 1 angegebenen Gattung.

Aus dem brasilianischen Gebrauchsmuster MU 8101948-3 U ist ein tragbarer Kaffeeernter bekannt, der zwei schwenkbare Rechen umfasst. Die Rechen sind direkt mit einem Betätigungselement verbunden. Der Abstand des Befestigungspunkts am Rechen ändert sich aufgrund der Schwenkbewegung im Betrieb laufend. Dies kann zu Geräuschentwicklung und Verschleiß führen.

Die EP 1 116 432 A1 zeigt ein Erntegerät, bei dem ein Schwenkhebel zur Übertragung der hin- und hergehenden Bewegung der Antriebsstange auf den Fingerträger vorgesehen ist. Der Schwenkhebel ist am Gehäuse des Erntegeräts schwenkbar gelagert und an einem Ende mit der Antriebsstange gekoppelt. Am anderen Ende ist der Fingerträger fixiert.

Der Erfindung liegt die Aufgabe zugrunde, ein Erntegerät der gattungsgemäßen Art zu schaffen, bei dem die im Betrieb auftretenden Vibrationen verringert sind.

Diese Aufgabe wird durch ein Erntegerät mit den Merkmalen des Anspruchs 1 gelöst.

Der Abstand des Befestigungspunkts des Gelenkhebels am Rechen zur Schwenkachse des Rechens beträgt bezogen auf den Hub des Betätigungselements von 1,4 bis 2,4. Bei diesem Verhältnis des Abstands des Befestigungspunkts des Gelenkhebels zur Schwenkachse des Rechens bezogen auf den Hub des Betätigungselements ergeben sich geringe Vibrationen.

Durch die Kopplung des Betätigungselements mit dem Rechen über einen Gelenkhebel können feste Verbindungen mit geringem Spiel zwischen Rechen und Betätigungselement zum Einsatz kommen. Es hat sich gezeigt, dass die im Betrieb entstehenden Vibrationen am Rechen dadurch verringert werden können, dass der Gelenkhebel so angeordnet wird, dass er in keiner Stellung der Rechen parallel zur Bewegungsachse des Betätigungselements liegt. Durch diese Anordnung erhöhen sich zwar die auftretenden Scherkräfte in den Lagern des Gelenkhebels. Es hat sich gezeigt, dass sich die Vibrationen erheblich verringern lassen, so dass die entstehenden höheren Kräfte an den Lagern in Kauf genommen werden können. Gegenüber bekannten Anordnungen wird der Befestigungspunkt des Gelenkhebels am Rechen nach außen versetzt. Dadurch wird der Abstand zwischen dem Befestigungspunkt des Gelenkhebels und der Schwenkachse des Rechens geringer. Diese zunächst nachteilig erscheinende Verringerung des Hebelarms geht jedoch einher mit einer Verringerung der im Betrieb entstehenden Vibrationen. Dadurch wird die Belastung des Bedieners im Betrieb verringert.

Vorteilhaft beträgt der Winkel in jeder Stellung des Rechens zwischen 10° und 60°. Insbesondere beträgt der Winkel in einer Stellung des Rechens etwa 45°.

Zweckmäßig sind zwei Rechen vorgesehen, die jeweils von einem Gelenkhebel gegenläufig betätigt sind, wobei die Schwenkachsen und die Gelenkhebel der Rechen symmetrisch zu einer Symmetrieebene angeordnet sind, die die Bewegungsachse des Betätigungselements enthält. Die symmetrische Anordnung und Betätigung der Rechen erlaubt eine gleichmäßige Belastung und einen teilweisen Ausgleich der durch die bewegten Massen hervorgerufenen Schwingungen. Es hat sich gezeigt, dass für geringe Vibrationswerte ein Abstand der Schwenkachsen der Rechen zur Symmetrieebene von 80 mm bis 85 mm vorteilhaft ist. Insbesondere beträgt der Abstand 81,8 mm bis 83,2 mm.

Es ist vorgesehen, dass der Antriebsmotor eine Antriebswelle rotierend antreibt, die durch das Führungsrohr geführt ist. Vorteilhaft ist an dem Ende des Führungsrohrs, an dem der Rechen festgelegt ist, ein Getriebe angeordnet, wobei das Getriebe die rotierende Bewegung der Antriebswelle in eine hin- und hergehende Bewegung des Betätigungselements übersetzt. Das Getriebe ist insbesondere ein einstufiges Kegelradgetriebe. Dadurch, dass das Getriebe als einstufiges Kegelradgetriebe ausgeführt ist, lässt sich eine große Übersetzung bei geringem Gewicht des Getriebes realisieren. Zweckmäßig entspricht die Drehachse der Antriebswelle der Bewegungsachse des Betätigungselements. Dadurch, dass die Drehachse und die Bewegungsachse keinen Versatz zueinander aufweisen, können die im Betrieb entstehenden Vibrationen minimiert werden. Es ergeben sich günstige Kräfteverhältnisse. Insbesondere ist das Getriebe in einem Getriebegehäuse angeordnet, und der Rechen ist mit dem Getriebegehäuse über mindestens einen Arm verbunden, wobei der Arm etwa in Richtung des Gelenkhebels liegt. Die Anordnung des Arms etwa in Richtung des Gelenkhebels führt zu einer günstigen Krafteinleitung. Gleichzeitig wird ein ansprechendes Äußeres des Erntegeräts erreicht.

Vorteilhaft weist der Rechen einen Träger auf, der sich im wesentlichen in einer Ebene senkrecht zur Schwenkachse des Rechens erstreckt und an dem die Finger gehalten sind. Die Finger sind dabei insbesondere lösbar an dem Träger gehalten. Bei Bruch oder Beschädigung eines Fingers kann dadurch der einzelne Finger ausgetauscht werden.

Vorteilhaft umfasst jeder Finger einen Stab aus glasfaserverstärktem Kunststoff und eine mit dem Stab verbundene Buchse. Der glasfaserverstärkte Stab weist eine hohe Stabilität und Festigkeit und ein geringes Gewicht auf. Dadurch sind die bewegte Masse und damit auch die entstehenden Vibrationen gering. Vorteilhaft ist der Stab in die Buchse eingeklebt. Dadurch kann auf einfache Weise eine feste, dauerhafte Verbindung zwischen Stab und Buchse erreicht werden. Dadurch, dass zur Fixierung des Stabs an dem Träger die Buchse zur Verfügung steht, kann der Stab selbst aus einfachem, abgelängtem Stangenmaterial bestehen. Eine Bearbeitung des glasfaserverstärkten Kunststoffs, die zu einer Schwächung des Materials führen kann, wird dadurch vermieden. Es ist vorgesehen, dass der Stab in einer Aufnahme der Buchse gehalten ist, die sich in Richtung auf das freie Ende des Stabs erweitert. Dadurch wird ein Zwischenraum zwischen der Aufnahme und dem Stab zur Aufnahme von Klebstoff gebildet. Vorteilhaft weist die Buchse einen Übergangsabschnitt auf, der sich in Richtung auf das freie Ende des Stabs erstreckt und den Stab umgibt, wobei der Übergangsabschnitt sich hier in Richtung auf das freie Ende des Stabs verjüngt. Der Übergangsabschnitt erstreckt sich dabei insbesondere nur über einen geringen Teil der Länge des Stabs. Die Verjüngung des Übergangsabschnitts bewirkt eine angepasste Festigkeit der Buchse. Der Übergangsabschnitt ist dabei insbesondere so ausgebildet, dass sich ein gleichmäßiger Festigkeitsübergang von dem in der Buchse gehaltenen Ende des Stabs bis zu dem außerhalb der Buchse liegenden Bereich des Stabs ergibt. Festigkeitssprünge, die einen Bruch des Stabs bewirken könnten, sind dadurch vermieden. Vorteilhaft besteht die Buchse mindestens teilweise aus Kunststoff. Dadurch kann die Buchse auf einfache Weise gefertigt werden und weist ein geringes Gewicht auf. Eine einfache Verbindung des Stabs mit der Buchse ergibt sich, wenn der Stab vom Kunststoff der Buchse umspritzt ist. Zur Fixierung der Buchse an dem Stab ist dadurch kein zusätzlicher Arbeitsschritt erforderlich.

Vorteilhaft ist mindestens ein Finger an dem Träger über eine Schraubverbindung gehalten. Die Schraubverbindung kann einfach gelöst werden. Zum Lösen der Schraubverbindung werden lediglich übliche Werkzeuge wie Schraubenschlüssel oder dgl. benötigt, so dass ein Austausch eines Fingers vor Ort auf einfache Weise erfolgen kann. Insbesondere besteht die Buchse vollständig aus Kunststoff. Um eine größere Festigkeit des Gewindes zu erzielen, kann jedoch auch vorgesehen sein, dass die Buchse eine metallische Hülse umfasst, die das Gewinde aufweist, sowie einen Abschnitt aus Kunststoff, in dem der Stab gehalten ist. Der das Gewinde aufweisende Abschnitt besitzt dadurch eine größere Festigkeit.

Es kann vorgesehen sein, dass mindestens ein Finger an dem Träger über eine Klemmverbindung gehalten ist. Dabei kann der Stab direkt geklemmt sein, es kann jedoch auch vorgesehen sein, dass der Stab in einer Buchse gehalten ist, die in der Klemmverbindung gehalten ist. Zweckmäßig ist der Finger an dem Träger in einer Aufnahme mit veränderbarer Größe gehalten. Eine einfache Gestaltung ergibt sich, wenn die Aufnahme geschlitzt ausgebildet ist und die Breite des Schlitzes veränderbar ist. Es kann jedoch auch vorgesehen sein, dass die Aufnahme ein elastisches Element enthält, und dass die Größe der Aufnahme durch elastische Verformung des elastischen Elements veränderbar ist. Um sicherzustellen, dass das elastische Element korrekt montiert wird und um ein Verlieren des elastischen Elements zu vermeiden, kann vorgesehen sein, dass das elastische Element mit dem Stab verbunden ist. Die Verbindung kann insbesondere durch eine Vulkanisation hergestellt sein.

Vorteilhaft ist mindestens ein Finger in dem Träger verrastet. Zweckmäßig besitzt der Stab einen Querstift, der mit mindestens einer Rastnase des Trägers zusammenwirkt. Ein Querstift kann in den Stab auf einfache Weise eingebracht werden und schwächt die Stabilität des Stabs nur geringfügig.

Ausführungsbeispiele der Erfindung werden im Folgenden anhand der Zeichnungen erläutert. Es zeigen:
- Fig. 1: eine schematische Darstellung eines Olivenschüttlers,
- Fig. 2 und Fig. 3: die Rechen des Olivenschüttlers in unterschiedlichen Endlagen,
- Fig. 4: eine vergrößerte, schematische Darstellung des Getriebegehäuses mit daran fixierten Rechen des Olivenschüttlers,
- Fig. 5: einen Schnitt durch das Getriebe des Olivenschüttlers in Richtung des Pfeils V-V in Fig. 4,
- Fig. 6: eine perspektivische Darstellung eines Fingers,
- Fig. 7: eine Schnittdarstellung des Fingers aus Fig. 6 in an dem Träger montiertem Zustand,
- Fig. 8: eine Schnittdarstellung eines Ausführungsbeispiels eines Fingers in an dem Träger montiertem Zustand,
- Fig. 9: eine Schnittdarstellung des Fingers aus Fig. 8,
- Fig. 10: ein Ausführungsbeispiel der Fixierung eines Fingers an einem Träger,
- Fig. 11: ein Ausführungsbeispiel der Fixierung von Fingern an einem Träger in Seitenansicht,
- Fig. 12: eine Draufsicht auf den Träger aus Fig. 11,
- Fig. 13: eine schematische Darstellung eines Stabs,
- Fig. 14: eine schematische Schnittdarstellung der Fixierung des Stabs aus Fig. 13 an einem Träger,
- Fig. 15: eine Ansicht von unten auf den Träger aus Fig. 14,
- Fig. 16: ein Ausführungsbeispiel eines Fingers in einer Buchse in Schnittdarstellung.

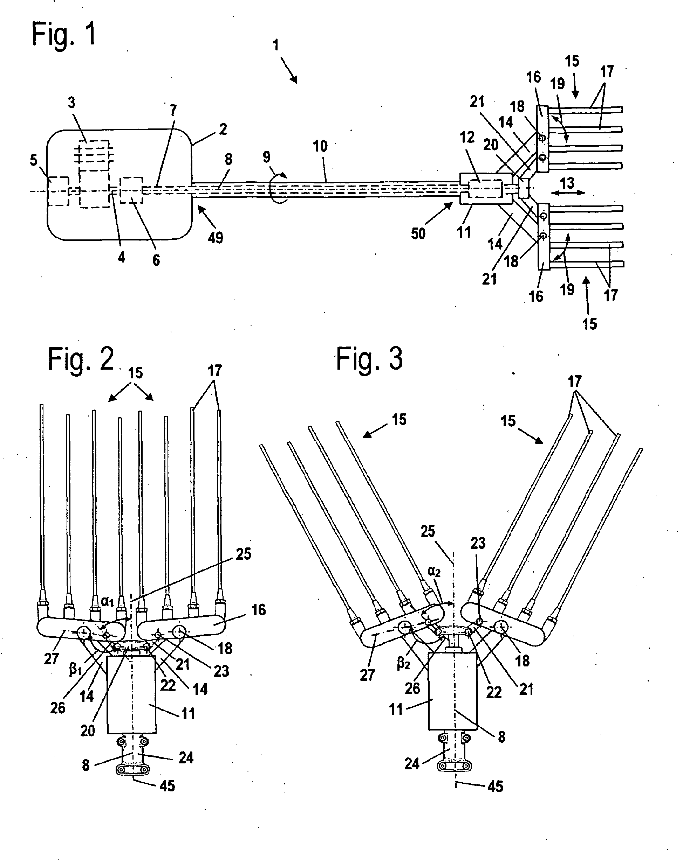

In Fig. 1 ist als Erntegerät schematisch ein Olivenschüttler 1 gezeigt. Der Olivenschüttler 1 ist als handgeführtes, handgetragenes Erntegerät ausgebildet. Der Olivenschüttler 1 besitzt ein Gehäuse 2, an dem nicht gezeigte Griffe zum Führen des Olivenschüttlers 1 angeordnet sind. Es kann jedoch auch vorgesehen sein, dass der Olivenschüttler 1 als rückentragbares Gerät ausgebildet ist. In dem Gehäuse 2 ist ein Antriebsmotor 3 angeordnet, der insbesondere ein Verbrennungsmotor ist. Der Antriebsmotor 3 kann als Zweitaktmotor oder als Viertaktmotor ausgebildet sein. Auch die Ausbildung des Antriebsmotors 3 als Elektromotor kann vorteilhaft sein. Der im Ausführungsbeispiel gezeigte Antriebsmotor 3 ist als Verbrennungsmotor ausgebildet und besitzt eine Kurbelwelle 4. An einem Ende der Kurbelwelle 4 ist eine Starteinrichtung 5, beispielsweise eine Federstarteinrichtung, angeordnet. Am gegenüberliegenden Ende der Kurbelwelle 4 ist eine Kupplung 6 vorgesehen, die die Kurbelwelle 4 mit einer Antriebswelle 7 verbindet, sobald die Kurbelwelle 4 eine vorgegebene Drehzahl erreicht hat. An dem Gehäuse 2 ist ein Führungsrohr 10 festgelegt. Dabei ist ein erstes Ende 49 des Führungsrohrs 10 am Gehäuse 2 und ein zweites Ende 50 des Führungsrohrs 10 an einem Getriebegehäuse 11 des Olivenschüttlers 1 festgelegt. Das Führungsrohr 10 ist von der Antriebswelle 7 durchragt. Die Antriebswelle 7 ist um eine Drehachse 8 in Richtung des in Fig. 1 gezeigten Pfeils 9 rotierend angetrieben.

In dem Getriebegehäuse 11 ist ein Getriebe 12 angeordnet, das die rotierende Bewegung der Antriebswelle 7 in eine hin- und hergehende Bewegung in Richtung des in Fig. 1 gezeigten Pfeils 13 umwandelt. Das Getriebe 12 treibt einen Gabelkopf 20 hin und hergehend an.

Am Getriebegehäuse 11 sind zwei Arme 14 festgelegt. An den Enden der Arme 14 ist jeweils ein Rechen 15 um eine Schwenkachse 18 schwenkbar gelagert. Die Rechen 15 werden im Betrieb in Richtung der in Fig. 1 gezeigten Pfeile 19 verschwenkt. Die Schwenkbewegung der beiden Rechen 15 erfolgt dabei gegenläufig, so dass die beiden Rechen 15 voneinander weg oder aufeinander zu bewegt werden. Jeder Rechen 15 besitzt einen Träger 16, an dem vier Finger 17 angeordnet sind. In der in Fig. 1 gezeigten Blickrichtung in Richtung der Schwenkachse 18 liegen die Finger 17 nebeneinander. Die Träger 16 liegen in einer Ebene etwa senkrecht zur Schwenkachse 18.

Die Rechen 15 sind mit dem Gabelkopf 20 über jeweils einen Gelenkhebel 21 verbunden. Über den Gelenkhebel 21 wird die hin- und hergehende Bewegung des Gabelkopfs 20 auf die Rechen 15 übertragen, und die Rechen 15 werden um die Schwenkachsen 18 verschwenkt.

Die Figuren 2 und 3 zeigen die Rechen 15 in ihren beiden Endlagen. In der in Fig. 2 gezeigten Endlage liegen alle Finger 17 der Rechen 15 in Richtung der Schwenkachse 18 gesehen parallel zueinander. Der Gabelkopf 20 ist in Richtung einer Bewegungsachse 25 hin- und hergehend bewegt. Die Bewegungsachse 25 fällt mit der Drehachse 8 der Antriebswelle 7 zusammen. Die Bewegungsachse 25 liegt mittig zwischen den beiden Rechen 15. Die Bewegungsachse 25 liegt in einer Symmetrieebene 45. Die Symmetrieebene 45 verläuft parallel zu den Schwenkachsen 18 der beiden Rechen. Die beiden Rechen 15 sind symmetrisch zu der Symmetrieebene 45 angeordnet. Die Arme 14 und die Gelenkhebel 21 sind ebenfalls symmetrisch zur Symmetrieebene 45 angeordnet. Auch die Schwenkachsen 18 der beiden Rechen 15 sind symmetrisch zur Symmetrieebene 45 angeordnet.

Die beiden Gelenkhebel 21 sind mit einem ersten Befestigungspunkt 22 am Gabelkopf 20 und mit einem zweiten Befestigungspunkt 23 am Träger 16 der Rechen 15 festgelegt. Der besseren Übersichtigkeit halber sind in Fig. 2 an einem der Rechen die Befestigungspunkte und an dem anderen Rechen die sich ergebenden Winkel eingezeichnet. Die Lage der Punkte und die Lage der Winkel sind aufgrund der symmetrischen Ausbildung der beiden Rechen 15 identisch. Die Befestigungspunkte 22 und 23 bezeichnen die geometrischen Mittelpunkte der Schwenklager der Gelenkhebel 21. Die Befestigungspunkte 22 und 23 liegen dabei jeweils auf einer Schwenkachse der Gelenkhebel. Die Verbindungslinie 26 der beiden Befestigungspunkte 22 und 23 schließt mit der Bewegungsachse 25 einen Winkel α₁ ein, der in jeder Stellung der Rechen 15 größer als 0° ist. Der Winkel α₁ wird dabei in einer Ebene senkrecht zu den Schwenkachsen 18 gemessen. Der Gelenkhebel 21 liegt damit in keiner Stellung der Rechen 15 parallel zur Bewegungsachse 25. Vorteilhaft beträgt der Winkel α₁ in jeder Stellung des Rechens 15 zwischen 10° und 60°. Insbesondere beträgt der Winkel α in einer Stellung des Rechens 15 etwa 45°.

Der zweite Befestigungspunkt 23 des Gelenkhebels 21 ist zwischen der Schwenkachse 18 und der Symmetrieebene 45 angeordnet. Die Verbindungslinie 27 zwischen der Schwenkachse 18 und dem zweiten Befestigungspunkt 23 schließt mit der Verbindungslinie 26 der beiden Befestigungspunkte 22, 23 des Gelenkhebels 21 einen Winkel *β*₁ ein. Die Verbindungslinien 26 und 27 sind dabei in einer Ebene aufgetragen, die senkrecht zu den Schwenkachsen 18 der Rechen 15 steht. Die Verbindungslinien 26 und 27 verlaufen in der Ebene der Träger 16. Der Winkel *β*₁ beträgt in jeder Stellung des Rechens 15 mehr als 90°.

Zur Verbindung mit dem Führungsrohr 10 ist am Getriebegehäuse 11 ein in Fig. 2 gezeigter Klemmabschnitt 24 angeordnet. Die Finger 17 der Rechen 15 besitzen alle die gleiche Länge. Allerdings ist jeder zweite Finger 17 gegenüber der Blattebene geneigt, wodurch sich in den Darstellungen in Fig. 2 und 3 unterschiedliche Längen ergeben.

In Fig. 3 sind die Rechen 15 in ihrer zweiten Endlage gezeigt. Die beiden Rechen 15 sind maximal nach außen voneinander weg verschwenkt. Die Finger 17 der beiden Rechen 15 sind zueinander geneigt. Die Verbindungslinie 26 der beiden Befestigungspunkte 22 und 23 des Gelenkhebels 21 schließt mit der Bewegungsachse 25 einen Winkel *α*₂ ein, der ebenfalls mehr als 0° beträgt. Der Winkel α₂ beträgt vorteilhaft ebenso wie der Winkel α₁ von 10° bis 60°. Zweckmäßig sind die Arme 14 und die Gelenkhebel 21 so angeordnet und ausgebildet, dass die Gelenkhebel 21 etwa in Richtung der Arme 14 liegen. Insbesondere liegen die Gelenkhebel 21 in einer Stellung parallel zu den Armen 14. Die Verbindungslinie 27 zwischen der Schwenkachse 18 und dem zweiten Befestigungspunkt 23 schließt mit der Verbindungslinie 26 einen Winkel *β*₂ ein, der mehr als 90° beträgt. Die Differenz der Winkel *α*₁ und *α*₂ ist vorteilhaft gering und beträgt insbesondere weniger als 20°, vorzugsweise weniger als 10°.

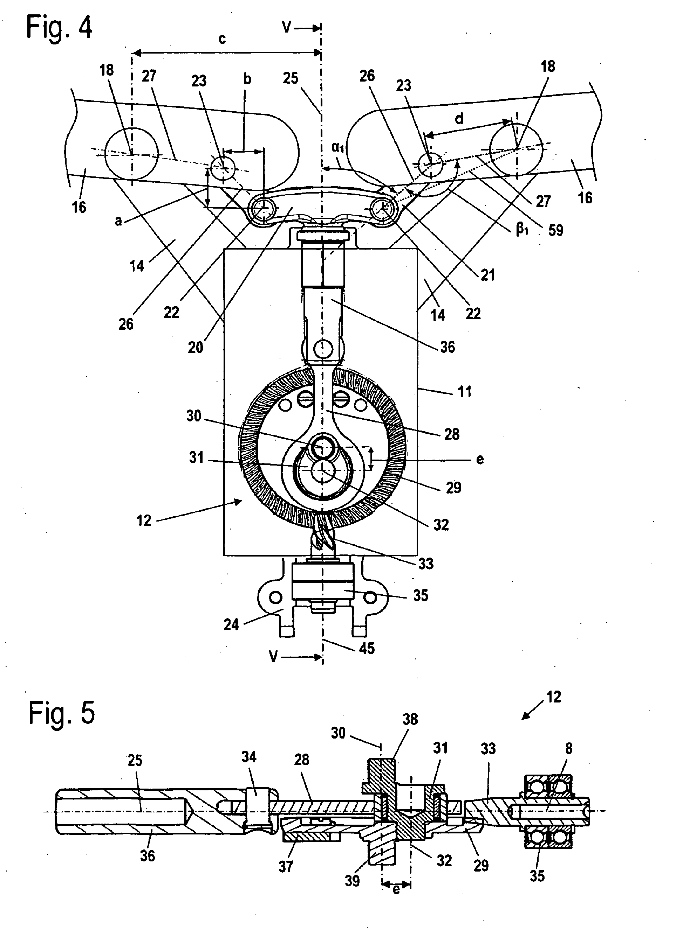

In Fig. 4 ist das Getriebe 12 mit den Trägern 16 schematisch gezeigt. Das Getriebe 12 besitzt ein Antriebsritzel 33, das von der Antriebswelle 7 angetrieben ist. Das Antriebsritzel 33 ist in einem Lager 35, das im Ausführungsbeispiel durch zwei Rillenkugellager gebildet ist, im Klemmabschnitt 24 gelagert (siehe auch Fig. 5). Das Lager 35 kann auch beispielsweise durch zwei Rillenkugellager ausgebildet sein. Das Ritzel 33 treibt ein Kegelrad 29 an. An dem Kegelrad 29 ist ein Pleuel 28 an einer Achse 32 gelagert. Das Kegelrad 29 ist von dem Ritzel 33 um eine Drehachse 30 angetrieben. Die Achse 32 ist gegenüber der Drehachse 30 des Kegelrads 29 mit einer Exzentrizität e angeordnet, die dem halben Hub des Gabelkopfs 20 entspricht.

In Fig. 5 ist der Aufbau des Getriebes 12 im Einzelnen gezeigt. Das Kegelrad 29 besitzt einen Lagerzapfen 39 zur Lagerung im Getriebegehäuse 11. Am Kegelrad 29 ist ein Lagerbolzen 31 fixiert, an dem das Pleuel 28 gelagert ist. Das Pleuel 28 kann am Lagerbolzen 31 ebenfalls über ein Wälzlager gelagert sein. An dem Lagerbolzen 31 ist ein Lagerzapfen 38 angeformt, der koaxial zum Lagerzapfen 39 liegt. An dem Kegelrad 29 ist ferner ein Gegengewicht 37 fixiert. Das Pleuel 28 ist über einen Bolzen 34 mit einem Zwischenstück 36 des Gabelkopfs 20 verbunden. Die Längsmittellinie der Bohrung im Zwischenstück 36 des Gabelkopfs 20 fällt mit der Drehachse 8 der Antriebswelle 7 zusammen. Damit sind die Bewegungsachse 25 des Gabelkopfs 20 und die Drehachse 8 der Antriebswelle 7 gleichachsig angeordnet.

In Fig. 4 sind die geometrischen Verhältnisse an den Trägern 16 näher erläutert. Wie die Figur zeigt, besitzt der zweite Befestigungspunkt 23 des Gelenkhebels 21 zum ersten Befestigungspunkt 22 in einer Richtung parallel zur Bewegungsachse 25 einen Abstand a. In einer Richtung senkrecht hierzu und zur Bewegungsachse 25 ist ein Abstand b zwischen den beiden Befestigungspunkten 22 und 23 gegeben. Die Lage der Befestigungspunkte 22 und 23 ist so gewählt, dass das Verhältnis des Abstands b zum Abstand a in jeder Lage der Rechen 15 von 0,2 bis 1,5 beträgt. In einer Stellung des Rechens 15 soll das Verhältnis 1 betragen.

Dadurch, dass die Gelenkhebel 21 am Träger 16 bezogen auf die Bewegungsachse 25 nach außen gekippt sind, ist der Abstand d zwischen der Schwenkachse 18 und dem zweiten Befestigungspunkt 23 am Träger 16 gegenüber bekannten Anordnungen verringert. Bezogen auf den Hub des Gabelkopfs 20, also auf die doppelte Exzentrizität e, beträgt der Abstand d vorteilhaft von 1,4 bis 2,4, insbesondere von 1,5 bis 2,1. Im Ausführungsbeispiel ist ein Verhältnis des Abstands d zum Hub von etwa 1,9 vorgesehen. Der Abstand c der Schwenkachsen 18 zur Symmetrieebene 45 beträgt zweckmäßig 75 mm bis 90 mm, vorteilhaft 80 mm bis 85 mm. Insbesondere beträgt der Abstand c 81,8 mm bis 83,2 mm.

Die beiden Befestigungspunkte 22 und 23 jedes Gelenkhebels 21 bilden in Richtung der Schwenkachse 18 gesehen mit der zugehörigen Schwenkachse 18 ein stumpfwinkliges Dreieck 59, das in Fig. 4 punktiert gezeichnet ist. Der der längsten Seite gegenüberliegende Winkel *β*₁ ist dabei größer als 90°.

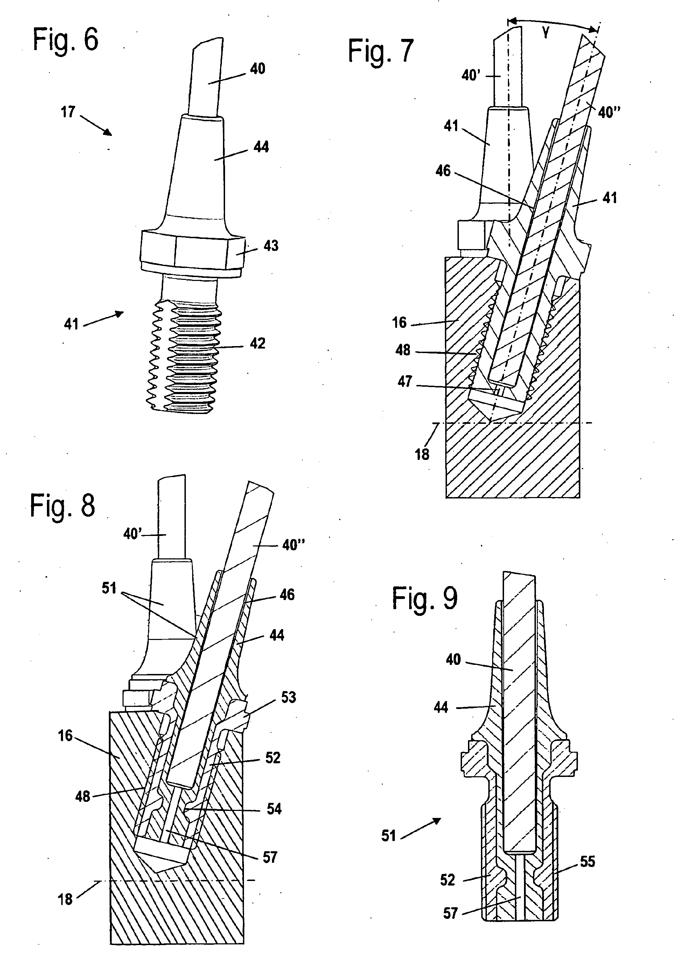

Die Figuren 6 und 7 zeigen ein erstes Ausführungsbeispiel der Gestaltung eines Fingers 17. Der Finger 17 besitzt einen Stab 40 aus einem glasfaserverstärkten Kunststoff (Carbon). Der Stab 40 besteht insbesondere aus abgelängtem Stangenmaterial. Der Stab 40 ist in einer Buchse 41 eingeklebt. Die Buchse 41 besteht aus Kunststoff, insbesondere aus kohlefaserverstärktem Kunststoff. Es kann auch vorgesehen sein, dass der Stab 40 von der Buchse 41 umspritzt ist. Die Buchse 41 besitzt ein Gewinde 42, mit dem die Buchse 41 in den Träger 16 eingeschraubt werden kann. Wie Fig. 7 zeigt, besitzt der Träger 16 hierzu ein Gewinde 48. In Fig. 7 ist auch die Lage der Schwenkachse 18 schematisch gezeigt. Die Buchse 41 besitzt einen Halteabschnitt 43, an dem ein Sechskant ausgebildet ist. Am Halteabschnitt 43 kann die Buchse 41 beispielsweise mit einem Schraubenschlüssel gegriffen werden, so dass der Finger 17 in den Träger 16 eingeschraubt bzw. aus dem Träger 16 ausgeschraubt werden kann. An den Halteabschnitt 43 schließt sich ein Übergangsabschnitt 44 an, der sich in Richtung auf das in den Figuren 6 und 7 nicht gezeigte freie Ende des Stabs 40 erstreckt. Der Übergangsabschnitt 44 erstreckt sich dabei nur über einen geringen Teil der Länge des Stabs 40. Im Übergangsabschnitt 44 verjüngt sich die Buchse 41.

Insbesondere ist die Buchse 41 im Übergangsabschnitt 44 konisch ausgebildet, wobei vorteilhaft ein Übergangsradius zum Halteabschnitt 43 vorgesehen ist. Dadurch werden Festigkeitssprünge vermieden. Die Verringerung der Festigkeit der Buchse 41 zum freien Ende des Stabs 40 hin erfolgt kontinuierlich. Wie Fig. 7 zeigt, ist der Stab 40 in der Buchse 41 in einer Aufnahme 46 gehalten. Die Aufnahme 46 ist konisch ausgebildet und weitet sich zum freien Ende des Stabs 40 hin auf. Der sich ergebende konische Spalt zwischen Stab 40 und Buchse 41 wird mit Klebstoff gefüllt. Aufgrund der Elastizität des Klebstoffs kann der Stab 40 im Betrieb im oberen Bereich der Buchse 41 eine geringfügige Relativbewegung zur Buchse 41 ausführen. Dadurch wird eine Kerbwirkung der Buchse 41 am Stab 40 vermieden. Am Boden der Aufnahme 46 ist eine Öffnung 47 vorgesehen, durch die Klebstoff austreten kann.

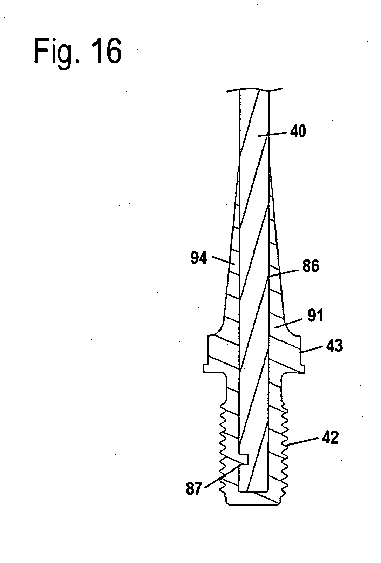

In Fig. 16 ist ein Ausführungsbeispiel eines Stabs 40 gezeigt, der vom Kunststoff einer Buchse 91 umspritzt ist. Die Aufnahme 86 ist in diesem Fall vorteilhaft zylindrisch ausgebildet und umschließt den Stab 40 dicht. Die Aufnahme 86 ist geschlossen ausgebildet; eine Öffnung 47 kann in diesem Fall entfallen. Um eine gute Fixierung des Stabs 40 in der Aufnahme 86 zu erreichen, besitzt der Stab 40 eine Kerbe 87, in die der Kunststoff der Buchse 91 beim Umspritzen des Stabs 40 eindringt und den Stab 40 formschlüssig fixiert. Anstatt der Kerbe 87 kann auch eine umlaufende Nut oder dgl. zur formschlüssigen Fixierung vorgesehen sein. Die Buchse 91 besitzt einen Übergangsabschnitt 94, der sich konisch verjüngt und annähernd geradlinig in die Außenseite des Stabs 40 übergeht. Ein Durchmessersprung und der damit verbundene Festigkeitssprung kann dadurch vermieden werden, so dass sich eine gute Haltbarkeit ergibt. Ebenso wie die Buchse 41 besitzt die Buchse 91 einen Halteabschnitt 43 und ein Gewinde 42, deren Gestaltung der Gestaltung bei der Buchse 41 entspricht. Die Buchse 91 kann auch eine metallische Hülse umfassen, die in die Buchse 91 eingespritzt ist und an der das Gewinde 42 ausgebildet ist.

Wie die Fig. 7 zeigt, sind die einzelnen Finger 17 des Trägers 16 zueinander geneigt. Ein erster Stab 40' verläuft in der gezeigten Zeichenebene etwa senkrecht zur Schwenkachse 18. Ein zweiter Stab 40" ist gegenüber der Längsrichtung des Stabs 40' um einen Winkel γ geneigt. Der Winkel γ kann beispielsweise zwischen 10° und 20° betragen. Es können jedoch auch andere Winkel γ vorteilhaft sein.

In den Figuren 8 und 9 ist ein weiteres Ausführungsbeispiel für einen Finger 17 gezeigt, der eine Buchse 51 besitzt. Die Buchse 51 besitzt einen Übergangsabschnitt 44 sowie eine Aufnahme 46, die denen der Buchse 41 entsprechen. Gleiche Bezugszeichen bezeichnen einander entsprechende Elemente. Die Buchse 51 besitzt eine Hülse 52, die aus Metall, beispielsweise aus Aluminium bestehen kann. Die Hülse 52 trägt ein Gewinde 55, mit dem die Hülse 52 in ein Innengewinde des Trägers 16 eingeschraubt ist. Die Hülse 52 besitzt eine Verengung 54. Die Hülse 52 ist mit Kunststoff an ihrem Innenumfang umspritzt. An der Hülse 52 sind das Gewinde 55 sowie ein Halteabschnitt 53 ausgebildet. Der Kunststoff der Buchse 51 bildet die Aufnahme 46 sowie den Übergangsabschnitt 44. Im Kunststoffmaterial ist auch die Öffnung 57 im Boden der Aufnahme 46 ausgebildet. Der Stab 40 kann in die Buchse 51 eingeklebt sein. Der Stab 40 kann jedoch auch vom Kunststoff der Buchse 51 umspritzt werden. Dabei können der Stab 40 und die Hülse 52 in einem Arbeitsgang umspritzt werden.

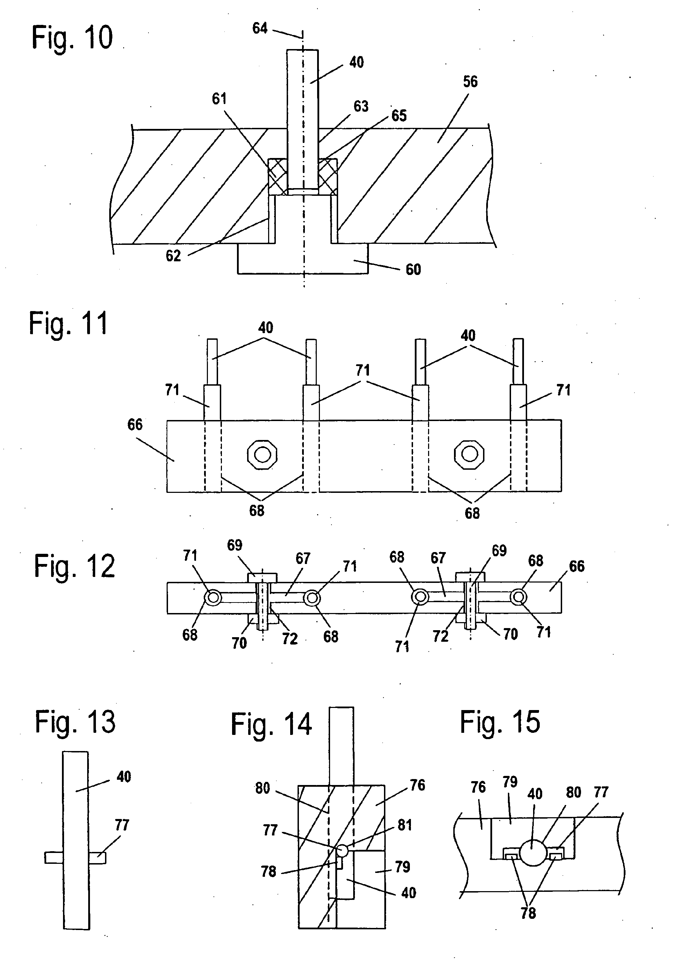

Ein Ausführungsbeispiel für die Fixierung eines Stabs 40 an einem Träger 56 ist schematisch in Fig. 10 gezeigt. Der Träger 56 besitzt eine Gewindebohrung 62, in deren Boden eine Durchgangsöffnung 63 zur Aufnahme eines Stabs 40 angeordnet ist. Der Stab 40 ragt durch die Durchgangsöffnung 63 in den erweiterten Bereich der Gewindebohrung 62. In der Gewindebohrung 62 ist ein elastischer Stopfen 61 angeordnet, der beispielsweise aus einem Elastomer bestehen kann. Der Stopfen 61 ist dabei vorteilhaft in einem Bereich angeordnet, in dem kein Gewindeabschnitt ausgebildet ist. Der elastische Stopfen 61 besitzt eine mittige Aufnahme 65, in die der Stab 40 ragt. In die Gewindebohrung 62 ist eine Klemmschraube 60 eingeschraubt. Die Klemmschraube 60 drückt beim Einschrauben gegen den elastischen Stopfen 61 in Richtung einer Längsachse 64 des Stabs 40. Der elastische Stopfen 61 wird in axialer Richtung zusammengedrückt und weitet sich dadurch in radialer Richtung auf. Dadurch wird der Stab 40 geklemmt.

Ein weiteres Ausführungsbeispiel der Fixierung von Stäben 40 an einem Träger 66 ist in den Figuren 11 und 12 gezeigt. Der Träger 66 weist, wie die Draufsicht in Fig. 12 zeigt, zwei Längsschlitze 67 auf, an deren Enden jeweils Aufnahmen 68 für einen Stab 40 ausgebildet ist. Die Stäbe 40 sind in Buchsen 71 angeordnet, in denen die Stäbe 40 beispielsweise eingeklebt sein können. Die Stäbe 40 können jedoch auch direkt in den Aufnahmen 68 angeordnet werden. Die Schlitze 67 durchragen den Träger vollständig. Im mittleren Bereich der Schlitze 67 ist jeweils eine Durchgangsbohrung 72 angeordnet, durch die eine Klemmschraube ragt. Von der Gegenseite ist eine Gegenmutter 70 auf die Klemmschraube 69 aufgeschraubt. Durch Einschrauben der Klemmschraube 69 in die Gegenmutter 70 wird die Breite des Schlitzes 67 und damit der Durchmesser der Aufnahmen 68 verringert. Dadurch werden die Buchsen 71 bzw. die Stäbe 40 im Träger 66 geklemmt gehalten.

Die Figuren 13 bis 15 zeigen ein weiteres Ausführungsbeispiel der Fixierung eines Stabs 40 an einem Träger 76. Wie Fig. 13 zeigt, besitzt der Stab 40 einen Querstift 77. Der Querstift 77 ragt durch eine Querbohrung des Stabs 40. Der Träger 76 besitzt im Bereich jedes Stabs 40 eine Aussparung 79. Im Bereich einer Seitenwand der Aussparung 79 erstreckt sich eine Durchgangsbohrung 80. An dem Träger 76 ist eine Aufnahme 81 für den Querstift 77 gebildet, in die der Querstift 77 zusammen mit dem Stab 40 in Richtung der Durchgangsbohrung 80 eingeschoben werden kann. Der Träger 76 besitzt zwei Rastnasen 78 beidseitig des Stabs 40, die hinter dem Querstift 77 einrasten und den Querstift 77, wie auch in Fig. 15 gezeigt ist, in der Aufnahme 81 fixieren.

Auch andere Arten der Fixierung eines Stabs 40 an einem Träger können vorteilhaft sein.

## Patentansprüche

1. Tragbares Erntegerät wie Olivenschüttler, Kaffeeernter oder dgl., mit einem Führungsrohr (10), an dessen einem Ende (49) ein Gehäuse (2) mit einem Antriebsmotor (3) und an dessen anderem Ende (50) mindestens ein um eine Schwenkachse (18) schwenkbar gelagerter Rechen (15) angeordnet ist, wobei der Rechen (15) mehrere Finger (17) umfasst, die in Richtung der Schwenkachse (18) des Rechens (15) gesehen nebeneinander angeordnet sind, und wobei ein Betätigungselement vorgesehen ist, das von dem Antriebsmotor (3) in Richtung einer Bewegungsachse (25) hin- und hergehend angetrieben ist,
wobei die Bewegung des Betätigungselements über mindestens einen Gelenkhebel (21) auf den Rechen (15) übertragen wird, wobei der Gelenkhebel (21) an einem ersten Befestigungspunkt (22) am Betätigungselement und an einem zweiten Befestigungspunkt (23) am Rechen (15) gehalten ist und wobei die Verbindungslinie (26) der beiden Befestigungspunkte (22, 23) des Gelenkhebels (21) in jeder Stellung des Rechens (15) mit der Bewegungsachse (25) des Betätigungselements einen Winkel (α₁, α₂) von mehr als 0° einschließt,
**dadurch gekennzeichnet, dass** das Verhältnis ders Abstands (d) des Befestigungspunkts (23) des Gelenkhebels (21) am Rechen (15) zur Schwenkachse (18) des Rechens (15) bezogen auf den Hub des Betätigungselements von 1,4 bis 2,4 beträgt.

2. Erntegerät nach Anspruch 1,
**dadurch gekennzeichnet, dass** der Winkel (α₁, α₂) in jeder Stellung des Rechens (15) zwischen 10° und 60° beträgt, wobei der Winkel (α₁, α₂) vorteilhaft in einer Stellung des Rechens (15) etwa 45° beträgt.

3. Erntegerät nach Anspruch 1 oder 2,
**dadurch gekennzeichnet, dass** zwei Rechen (15) vorgesehen sind, die jeweils von einem Gelenkhebel (21) gegenläufig betätigt sind, wobei die Schwenkachsen (18) und die Gelenkhebel (21) der Rechen (15) symmetrisch zu einer Symmetrieebene (45) angeordnet sind, die die Bewegungsachse (25) des Betätigungselements enthält, wobei der Abstand (c) der Schwenkachsen (18) der Rechen (15) zur Symmetrieebene (45) vorteilhaft von 80 mm bis 85 mm, insbesondere von 81,8 mm bis 83,2 mm beträgt.

4. Erntegerät nach einem der Ansprüche 1 bis 3,
**dadurch gekennzeichnet, dass** der Antriebsmotor (3) eine Antriebswelle (7) rotierend antreibt, die durch das Führungsrohr (10) geführt ist und wobei an dem Ende (50) des Führungsrohrs (10), an dem der Rechen (15) festgelegt ist, ein Getriebe (12) angeordnet ist, das die rotierende Bewegung der Antriebswelle (7) in die hin- und hergehende Bewegung des Betätigungselements übersetzt, wobei das Getriebe (12) insbesondere ein einstufiges Kegelradgetriebe ist, wobei die Drehachse (8) der Antriebswelle (7) vorteilhaft der Bewegungsachse (25) des Betätigungselements entspricht und wobei das Getriebe (12) insbesondere in einem Getriebegehäuse (11) angeordnet ist, und dass der Rechen (15) mit dem Getriebegehäuse (11) über mindestens einen Arm (14) verbunden ist, wobei der Arm (.14) etwa in Richtung des Gelenkhebels (21) liegt.

5. Erntegerät nach einem der Ansprüche 1 bis 4,
**dadurch gekennzeichnet, dass** der Rechen (15) einen Träger (16, 56, 66, 76) aufweist, der sich im Wesentlichen in einer Ebene senkrecht zur Schwenkachse (18) des Rechens (15) erstreckt und an dem die Finger (17) gehalten sind, wobei Finger (17) insbesondere lösbar an dem Träger (16, 56, 66, 76) gehalten sind.

6. Erntegerät nach Anspruch 5,
**dadurch gekennzeichnet, dass** jeder Finger (17) einen Stab (40) aus glasfaserverstärktem Kunststoff und eine mit dem Stab (40) verbundene Buchse (41, 51, 71, 91) umfasst.

7. Erntegerät nach Anspruch 6,
**dadurch gekennzeichnet, dass** der Stab (40) in die Buchse (41, 51, 71) eingeklebt ist.

8. Erntegerät nach Anspruch 6 oder 7,
**dadurch gekennzeichnet, dass** der Stab (40) in einer Aufnahme (46) der Buchse (41, 51) gehalten ist, wobei sich die Aufnahme (46) in Richtung auf das freie Ende des Stabs (40) erweitert.

9. Erntegerät nach einem der Ansprüche 6 bis 8,
**dadurch gekennzeichnet, dass** die Buchse (41, 51, 91) einen Übergangsabschnitt (44, 94) aufweist, der sich in Richtung auf das freie Ende des Stabs (40) erstreckt und den Stab (40) umgibt, wobei der Übergangsabschnitt (44, 94) sich in Richtung auf das freie Ende des Stabs (40) verjüngt.

10. Erntegerät nach einem der Ansprüche 6 bis 9,
**dadurch gekennzeichnet, dass** die Buchse (41, 51, 71, 91) mindestens teilweise aus Kunststoff besteht, wobei der Stab (40) vorteilhaft vom Kunststoff der Buchse (41, 51, 71, 91) umspritzt ist.

11. Erntegerät nach einem der Ansprüche 5 bis 10,
**dadurch gekennzeichnet, dass** mindestens ein Finger (17) an dem Träger (16) über eine Schraubverbindung gehalten ist, wobei die Buchse (41, 51, 91) insbesondere ein Gewinde (42, 55) trägt, das mit einem Gewinde (48) des Trägers (16) zusammenwirkt und wobei die Buchse (51, 91) vorteilhaft eine metallische Hülse (52) umfasst, die das Gewinde (55) aufweist, sowie einen Abschnitt aus Kunststoff, in dem der Stab (40) gehalten ist.

12. Erntegerät nach einem der Ansprüche 5 bis 10,
**dadurch gekennzeichnet, dass** mindestens ein Finger (17) an dem Träger (56, 66) über eine Klemmverbindung gehalten ist, wobei der Finger (17) an dem Träger (56, 66) vorteilhaft in einer Aufnahme (65, 68) mit veränderbarer Größe gehalten ist, wobei die Aufnahme (68) insbesondere geschlitzt ausgebildet ist und die Breite des Schlitzes (67) veränderbar ist, wobei die Aufnahme vorteilhaft ein elastisches Element enthält und die Größe der Aufnahme (65) durch elastische Verformung des elastischen Elements veränderbar ist und wobei das elastische Element vorteilhaft mit dem Stab (40) verbunden ist, insbesondere durch Vulkanisation.

13. Erntegerät nach einem der Ansprüche 5 bis 10,
**dadurch gekennzeichnet, dass** mindestens ein Finger (17) in dem Träger (76) verrastet ist, wobei der Stab (40) vorteilhaft einen Querstift (77) aufweist, der mit mindestens einer Rastnase (78) des Trägers (76) zusammenwirkt.

## Claims

1. Portable harvesting implement, such as olive shaker, coffee harvester or the like, with a guide tube (10), at one end (49) of which a housing (2) with a drive motor (3) is mounted and at the other end (50) of which at least one rake (15) pivotable about a pivot axis (18) is mounted, the rake (15) having a plurality of fingers (17) arranged adjacent to one another in the direction of the pivot axis (18) of the rake (15), wherein an operating element driven by the drive motor (3) to perform a reciprocating movement in the direction of an axis of motion (25) is provided, wherein the movement of the operating element is transmitted to the rake (15) via at least one toggle lever (21), wherein the toggle lever (21) is held to the operating element at a first mounting point (22) and to the rake (15) at a second mounting point (23) and wherein the connecting line (26) of the two mounting points (22, 23) of the toggle lever (21) encloses in any position of the rake (15) an angle (α₁, α₂) of more than 0° with the axis of motion (25) of the operating element,
**characterised in that** the ratio of the distance (d) between the mounting point (23) of the toggle lever (21) on the rake (15) and the pivot axis (18) of the rake (15), relative to the stroke of the operating element, is 1.4 to 2.4.

2. Harvesting implement according to claim 1,
**characterised in that** the angle (α₁, α₂) is 10° to 60°, the angle (α₁, α₂) being expediently approximately 45° in one position of the rake (15).

3. Harvesting implement according to claim 1 or 2,
**characterised in that** two rakes (15) operated in opposite directions by a toggle lever (21) each are provided, wherein the pivot axes (18) and the toggle levers (21) of the rakes (15) are arranged symmetrical to a plane of symmetry (45) containing the axis of motion (25) of the operating element, the distance (c) of the pivot axes (18) of the rakes (15) from the plane of symmetry (45) expediently being 80 mm to 85 mm, in particular 81.8 mm to 83.2 mm.

4. Harvesting implement according to any of claims 1 to 3,
**characterised in that** the drive motor (3) rotates a drive shaft (7) guided through the guide tube (10), wherein the end (50) of the guide tube (10) where the rake (15) is mounted supports a gearbox (12) which converts the rotary movement of the drive shaft (7) into the reciprocating movement of the operating element, wherein the gearbox (12) is in particular a single-stage bevel gear train, wherein the axis of rotation (8) of the drive shaft (7) expediently corresponds to the axis of motion (25) of the operating element and wherein the gearbox (12) is in particular accommodated in a gear housing (11), and **in that** the rake (15) is joined to the gear housing (11) by at least one arm (14), the arm (14) extending approximately in the direction of the toggle lever (21).

5. Harvesting implement according to any of claims 1 to 4,
**characterised in that** the rake (15) has a base (16, 56, 66, 76) extending substantially in a plane lying at right angles to the pivot axis (18) of the rake (15) and holding the fingers (17), the fingers (17) being in particular releasably held on the base (16, 56, 66, 76).

6. Harvesting implement according to claim 5,
**characterised in that** each finger (7) comprises a rod (40) made of glass fibre reinforced plastic and a bushing (41, 51, 71, 91) permanently joined to the rod (40).

7. Harvesting implement according to claim 6,
**characterised in that** the rod (40) is secured in the bushing (41, 51, 71) by bonding.

8. Harvesting implement according to claim 6 or 7,
**characterised in that** the rod (40) is held in a location (46) of the bushing (41, 51), the location (46) widening towards the free end of the rod (40).

9. Harvesting implement according to any of claims 6 to 8,
**characterised in that** the bushing (41, 51, 91) includes a transitional section (44, 94) extending towards the free end of the rod (40) and enclosing the rod (40), the transitional section (44, 94) tapering towards the free end of the rod (40).

10. Harvesting implement according to any of claims 6 to 9,
**characterised in that** the bushing (41, 51, 71, 91) is at least partially made of plastic, the rod (40) being expediently embedded into the plastic of the bushing (41, 51, 71, 91) by moulding.

11. Harvesting implement according to any of claims 5 to 10,
**characterised in that** at least one finger (17) is retained on the base (16) by a screw connection, the bushing (41, 51, 91) in particular having a thread (42, 55) acting together with a thread (48) of the base (16) and the bushing (51, 91) expediently including a metallic sleeve (52) provided with the thread (55) and a plastic section in which the rod (40) is held.

12. Harvesting implement according to any of claims 5 to 10,
**characterised in that** at least one finger (17) is retained on the base (56. 66) by a clamp connection, the finger (17) being expediently retained on the base (56, 66) in a location (65, 68) of variable size, wherein the location (68) is in particular slotted and the width of the slot (67) is variable, wherein the location expediently includes an elastic element and the size of the location (65) can be varied by the elastic deformation of the elastic element, and wherein the elastic element is expediently joined to the rod (40), in particular by vulcanisation.

13. Harvesting implement according to any of claims 5 to 10,
**characterised in that** at least one finger (17) is latched in the base (76), the rod (40) expediently comprising a cross-pin (77) acting together with at least one latching lug (78) of the base (76).

## Revendications

1. Récolteuse portative telle qu'un secoueur d'olives, une récolteuse de café ou un dispositif similaire, avec un tube de guidage (10) à une extrémité (49) duquel est disposé un boîtier (2) contenant un moteur d'entraînement (3) tandis qu'à son autre extrémité (50) est disposé au moins un râteau (15) monté pivotant sur un pivot (18), étant précisé que le râteau (15) comprend plusieurs dents (17) qui sont disposées côte à côte, vues dans le sens du pivot (18) du râteau (15), qu'il est prévu un élément d'actionnement qui est entraîné par le moteur d'entraînement (3) suivant un mouvement de va-et-vient dans le sens d'un axe de déplacement (25), que le mouvement de l'élément d'actionnement est transmis par l'intermédiaire d'au moins un levier articulé (21) au râteau (15), que le levier articulé (21) est fixé à l'élément d'actionnement au niveau d'un premier point de fixation (22), et au râteau (15) au niveau d'un second point de fixation (23), et que la ligne de liaison (26) des deux points de fixation (22, 23) du levier articulé (21), dans n'importe quelle position du râteau (15), définit avec l'axe de déplacement (25) de l'élément d'actionnement un angle (α₁, α₂) de plus de 0°,
**caractérisée en ce que** le rapport de la distance (d) entre le point de fixation (23) du levier articulé (21) sur le râteau (15) et le pivot (18) du râteau (15) sur la course de l'élément d'actionnement est de 1,4 à 2, 4.

2. Récolteuse selon la revendication 1,
**caractérisée en ce que** l'angle (α₁, α₂) dans n'importe quelle position du râteau (15) est situé entre 10° et 60°, l'angle (α₁, α₂) étant avantageusement d'environ 45°, dans une position du râteau (15).

3. Récolteuse selon la revendication 1 ou 2,
**caractérisée en ce qu'**il est prévu deux râteaux (15) qui sont actionnés en sens inverse par des leviers articulés respectifs (21), les pivots (18) et les leviers articulés (21) des râteaux (15) étant disposés symétriquement par rapport à un plan de symétrie (45) qui contient l'axe de déplacement (25) de l'élément d'actionnement, la distance (c) entre les pivots (18) des râteaux (15) et le plan de symétrie (45) étant avantageusement de 80 mm à 85 mm, en particulier de 81,8 mm à 83,2 mm.

4. Récolteuse selon l'une des revendications 1 à 3,
**caractérisée en ce que** le moteur d'entraînement (3) entraîne en rotation un arbre d'entraînement (7) qui traverse le tube de guidage (10), étant précisé qu'il est prévu sur l'extrémité (50) du tube de guidage (10) à laquelle est fixé le râteau (15) une transmission (12) qui transforme le mouvement rotatif de l'arbre d'entraînement (7) en mouvement de va-et-vient de l'élément d'actionnement, que la transmission (12) est constituée en particulier par un engrenage conique à simple démultiplication, que l'axe de rotation (8) de l'arbre d'entraînement (7) correspond avantageusement à l'axe de déplacement (25) de l'élément d'actionnement et que la transmission (12) est disposée en particulier dans un boîtier de transmission (11), et **en ce que** le râteau (15) est relié au boîtier de transmission (11) par l'intermédiaire d'au moins un bras (14), le bras (14) étant situé à peu près dans le sens du levier articulé (21).

5. Récolteuse selon l'une des revendications 1 à 4,
**caractérisée en ce que** le râteau (15) comporte un support (16, 56, 66, 76) qui s'étend globalement dans un plan perpendiculaire au pivot (18) du râteau (15) et sur lequel sont fixées les dents (17), les dents (17) étant fixées en particulier de manière amovible au support (16, 56, 66, 76).

6. Récolteuse selon la revendication 5,
**caractérisée en ce que** chaque dent (17) comprend une barre (40) en matière plastique renforcée par des fibres de verre, et un manchon (41, 51, 71, 91) relié à la barre (40).

7. Récolteuse selon la revendication 6,
**caractérisée en ce que** la barre (40) est collée dans le manchon (41, 51, 71).

8. Récolteuse selon la revendication 6 ou 7,
**caractérisée en ce que** la barre (40) est fixée dans un logement (46) du manchon (41, 51), le logement (46) s'élargissant en direction de l'extrémité libre de la barre (40).

9. Récolteuse selon l'une des revendications 6 à 8,
**caractérisée en ce que** le manchon (41, 51, 91) comporte une partie de transition (44, 94) qui s'étend en direction de l'extrémité libre de la barre (40) et qui entoure celle-ci, la partie de transition (44, 94) ayant une forme effilée en direction de ladite extrémité libre de la barre (40).

10. Récolteuse selon l'une des revendications 6 à 9,
**caractérisée en ce que** le manchon (41, 51, 71, 91) se compose au moins en partie de matière plastique, la barre (40) étant avantageusement enrobée par injection avec la matière plastique du manchon (41, 51, 71, 91).

11. Récolteuse selon l'une des revendications 5 à 10,
**caractérisée en ce qu'**au moins une dent (17) est fixée au support (16) par vissage, le manchon (41, 51, 91) portant en particulier un filetage (42, 55) qui coopère avec un filetage (48) du support (16), et le manchon (51, 91) comprenant avantageusement une douille métallique (52) qui présente le filetage (55), ainsi qu'une partie en matière plastique dans laquelle est fixée la barre (40).

12. Récolteuse selon l'une des revendications 5 à 10,
**caractérisée en ce qu'**au moins une dent (17) est fixée au support (56, 66) par serrage, étant précisé que la dent (17) est fixée avantageusement au support (56, 66) dans un logement (65, 68) de taille variable, que le logement (68) est en particulier fendu et que la largeur de la fente (67) est variable, que le logement contient avantageusement un élément élastique et que la taille du logement (65) est variable grâce à la déformation élastique dudit élément élastique, et que l'élément élastique est avantageusement relié à la barre (40), en particulier par vulcanisation.

13. Récolteuse selon l'une des revendications 5 à 10,
**caractérisée en ce qu'**au moins une dent (17) est enclenchée dans le support (76), la barre (40) comportant avantageusement une tige transversale (77) qui coopère avec au moins une saillie d'enclenchement (78) du support (76).
